(19) Europäisches Patentamt
European Patent Office
Office européen des brevets

(11) Publication number: 0 383 058 A1

# (12) EUROPEAN PATENT APPLICATION

(21) Application number: 90101312.8

(22) Date of filing: 23.01.90

(51) Int. Cl.5: C08L 67/02, //(C08L67/02, 55:02)

(30) Priority: 16.02.89 US 310950

(43) Date of publication of application: 22.08.90 Bulletin 90/34

(84) Designated Contracting States: DE FR GB IT NL

(71) Applicant: GENERAL ELECTRIC COMPANY
1 River Road
Schenectady New York 12305(US)

(72) Inventor: Liu, Ping Yuan
124 Tanager Court
Naperville, Illinois 60565(US)
Inventor: Boutni, Omar Mohamed
1232 Oriole Circle
Mount Vernon, Indiana 47620(US)

(74) Representative: Catherine, Alain
General Electric France Service de Propriété Industrielle 18 Rue Horace Vernet
F-92136 Issy-Les-Moulineaux Cedex(FR)

## (54) Polyesters modified with ABS terpolymers.

(57) The impact strength of polyester resins, preferably polybutylene terephthalate resins can be improved by the addition of an ABS graft terpolymer wherein there is a specific weight ratio of the A/B/S components in the terpolymer to each other.

EP 0 383 058 A1

# POLYESTERS MODIFIED WITH ABS TERPOLYMERS

This invention relates to high-impact mixtures of polybutylene terephthalate and ABS-graft polymer having a defined ratio of the A/B/S components therein.

## BACKGROUND OF THE INVENTION

Polybutylene terephthalates have acquired considerable significance as thermoplastic molding compositions by virtue of their valuable technological properties, e.g., chemical resistance, rigidity, hardness, abrasion resistance, stability under dynamic and thermal stressing, and rapid processibility. A disadvantage of these molding compositions is that their notched Izod impact strength is inadequate for certain specific applications. Proposals have been put forward for increasing the toughness of thermoplastic polyesters by the addition of co-condensation of other polymers, particularly those based on modified elastomers and polyolefins (German Offenlegungsschrifts Nos. 1,694,173 and 1,928,369; German Auslegeschrifts Nos. 1,961,226 and 1,962,855; German Offenlegungsschrifts Nos. 2,248,242, 2,310,034, 2,357,406 and 2,364,318 and U.S.Pat. Nos. 3,236,914 and 3,723,574). However, the proposed measures are attended by the disadvantage that the improvement in toughness is accompanied by a significant deterioration in other properties.

## DESCRIPTION OF THE INVENTION

It has now been discovered that compositions comprising of polyester resin and a ABS terpolymer will have improved impact strength as well as knit line strength when a terpolymer is used that has a specific weight ratio of the acrylonitrile-butadine-styrene components therein. Specifically, it has been discovered that the optimum weight ratio of said components, is (for every one hundred weight parts of ABS resin) from about 13 to about 18 parts by weight of acrylonitrile, from about 45 to about 47 parts by weight of butadine, and from about 35 to about 42 parts by weight of styrene.

## DETAILED DESCRIPTION OF THE INVENTION

The preferred polyesters utilized in the present invention are higher molecular weight polyesters, most preferably linear polymeric glycol esters of terephthalic acid and isophthalic acids. They can be prepared by known techniques such as by the alcoholysis of esters of the phthalic acid with a glycol and subsequent polymerization, by heating glycols with the free acids or with halide derivatives thereof, and similar processes. These are described in U.S. Pat. Nos. 2,465,319 and 3,047,539, and elsewhere. In addition to the phthalates, amounts, e.g., from about 0.5 to 15% by weight, of other aromatic dicarboxylic acids, such as naphthalene dicarboxylic acid, can be present in the polyester component. Although the term "linear" is used, the reactants can also include amounts of tri- or polyfunctional branching agents, such as trimethylolpropane, pentaerythritol, and trimethyl trimesate.

Preferred polyesters will be of the family consisting of high molecular weight, polymeric glycol terephthalates or isophthalates having repeating units of the general formula:

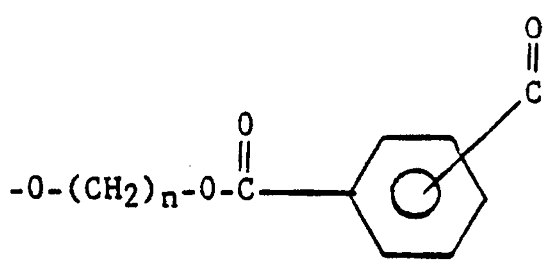

wherein n is a whole number of from 2 to 10, preferably from 2 to 4, and mixtures of such esters, including copolyesters of terephthalic and isophthalic acids of up to about 30 mole % isophthalic units.

Especially preferred polyesters are poly(ethylene terephthalate and poly(butylene terephthalate). The most preferred polyesters are poly(butylene terephthalates), with poly(1,4-butylene terephthalate being especially preferred.

The preferred polybutylene terephthalates contain at least 90 mole percent, based on the dicarboxylic acid component of terephthalic acid residues and at least 90 mole percent, based on the diol component, of 1,4-butane diol residues.

In addition to terephthalic acid residues, the preferred polybutylene terephthalates may contain up to 10 mole percent of residues of other aromatic, aliphatic or cycloaliphatic dicarboxylic acids, for example, succinic acid, adipic acid or isophthalic acid residues. In addition to butane diol residues, they may contain up to 10 mole percent of residues of another diol which may correspond to the following formula:

$HO\text{-}C_nH_{2n}\text{-}OH$

in which n is an integer of from 2 to 10. More particularly, up to 10 mole percent of alkyl-substituted diols, such as neopentyl glycol, 2,2,4-trimethyl-1, 6-hexane diol, 2-ethyl-1.3-propane diol, 2,2,4-trimethyl-1.3-pentane diol, 2-methyl-2,4-pentane diol, 3-methyl-2.4-pentane diol or 2-ethyl-1,3-hexane diol may also be incorporated (German Offenlegungsschrifts Nos. 2,407,674; 2,407,776 and 2,715,932).

The preferred polybutylene terephthalates may also be branched by compounds having a branching effect, such as polycarboxylic acids or polyols (German Auslegeschrift No. 1,900,270).

The most preferred polybutylene terephthalates have an intrinsic viscosity of generally from 0.7 to 1.5 dl/g, preferably from 0.8 to 1.3 dl/g and, more particularly, from 0.8 to 1.05 dl/g, as measured in phenol/o-dichlorobenzene (1:1 parts by weight).

It has now been discovered that mixtures of a polyester resin or resins and a ABS terpolymer will have improved impact strength, over previous polyester-ABS mixtures, when a terpolymer is used that has a specific weight ratio of the acrylonitrile-butadine-styrene components therein. Specifically, it has been discovered that the optimum weight ratio of said components, is, for every one hundred weight parts of ABS resin, from about 13 to about 18 parts by weight of acrylonitrile, from about 45 to about 47 parts by weight of butadiene, and from about 35 to about 42 parts by weight of styrene.

The processes for producing ABS terpolymers are well known in the art. Suitable ABS terpolymers for use in the present invention are also available commercially.

The compositions of the present invention will preferably contain (a) from about 40 % to about 98 % by weight, and most preferably from about 60% to about 97% by weight, of at least one polyester preferably selected from the group consisting of poly(ethylene terephthalate) and a poly(butylene terephthalate), each polyester comprising 0-100% of the polyester component, and, most preferably a poly(butylene terephthalate) polyester; and (b) from about 2 % to about 60 % by weight, and most preferably from about 3% to about 40% by weight, of the specified ABS terpolymer, said weight percentages being based on the total weight of the polyester resins and the ABS terpolymer.

It should be understood that the compositions obtained according to this invention may contain one or more conventional additives such as, for example, antioxidants, carbon black, reinforcing agents, plasticizers, lubricity promoters, color stabilizers, ultraviolet absorbers, X-ray opacifiers, dyes, pigments, fillers, mold release agents and the like. Satisfactory thermal, oxidative and/or ultraviolet stabilizers comprise phenols and their derivatives, amines and their derivatives, compounds containing both hydroxyl and amine groups, hydroxyazines, oximes, polymeric phenolic esters and salts of multivalent metals in which the metal is in its lower state.

Representative phenol derivatives useful as stabilizers include 3,5-di-tert-butyl-hydroxy hydrocinnamic triester with 1,3, 5-tris-(2-hydroxyethyl-s-triazine-2,4,6-(1H, 3H, 5H) trione; 4,4′-bis-(2,6-ditertiary-butylphenol); 1,3,5-trimethyl-2,4,6--tris-(3,5-ditertiary-butyl-4-hydroxylbenzyl)benzene and 4,4′-butylidene-bis (6-tertiary-butyl-m-cresol). Various inorganic metal salts or hydroxides can be used as well as organic complexes such as nickel dibutyl dithiocarbamate, manganous salicylate and copper 3-phenylsalicylate. Typical amine stabilizers include N,N′-bis(betanaphthyl)-p-phenylenediamine; N,N′-bis-(1-methylheptyl)-p-phenylenediamine and either phenyl-beta-napththyl amine or its reaction products with aldehydes. Mixtures of hindered phenols with esters or thiodipropionic, mercaptides and phosphite esters are particularly useful. Additional stabilization to ultraviolet light can be obtained by compounding with various UV absorbers such as substituted benzophenones and/or benzotriazoles.

Particularly useful stabilizers are hindered phenols which include phenols of the formula

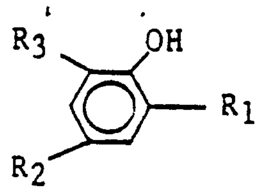

wherein $R_1$ and $R_3$ are hydrocarbon groups having from one to about 20 carbon atoms, and $R_2$ is a hydrogen atom or a hydrocarbon group having from one to about 20 carbon atoms, and bisphenol of the formula

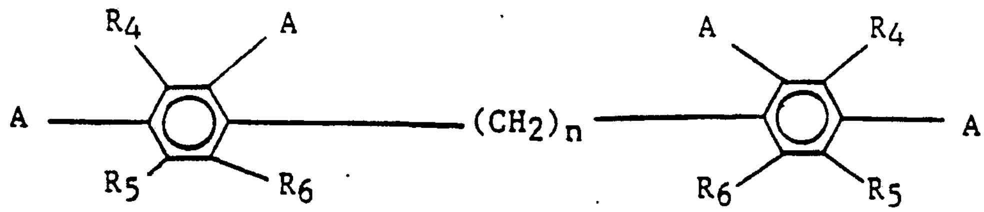

wherein $R_4$, $R_5$ and $R_6$ are each a hydrogen atom or a hydrocarbon group having from one to about 20 carbon atoms, one of the two A's on each ring is a hydroxyl group and the other A on each ring is a hydrogen atom or a hydrocarbon group having from one to about 20 carbon atoms; and n is an integer of from 0 to about 20.

Preferred hindered phenols useful in this invention include 2,6-di-tert-butyl-4-methyl-phenol, commonly known as BHT (sold under the tradename Ionol by Shell Chemical Co.); 4,4-methylene bis(2,6-di-tert-butylphenol) and 2,6-di-tert-butyl-4-n-butylphenol (sold under the tradename Ethyl 702 and Ethyl 744, respectively, by Ethyl Corp.); and tetrakis[methylene 3-(3',5'-di-tert-butyl-4'-hydroxyphenyl) proprionate]-methane and stearyl-3-(3',5'-di-tertbutyl-4'-hydroxylphenyl) proprionate (sold under the tradenames Irganox 1010 and Irganox 1076, respectively, by Ciba-Geigy).

The composition of the present invention will preferably include reinforcing agents such as fibrous (filamentous) glass and/or fillers, such as mineral fillers such as clay, talc and the like, preferably mica. The fillers can be untreated or treated with silane or titanate coupling agents, etc. The preferred reinforcing agent for use in the present invention is filamentous glass, which is is well known in the art.

The components of the composition of the present invention can be intimately blended in a number of procedures. In one way, the various additives to the polyester resin(s) are put into an extrusion compounder with the dry polyester resin(s) and the blend is heated at an elevated temperature, e.g., 450°-550°F., and extruded to produce molding pellets. In another procedure, the additives are mixed with the polyester resin-(s) by blending at ordinary temperatures, then the blend is fluxed on a mill, heated, e.g., at 450°-550°F., then cooled and comminuted; or the blend can be extruded at 450°-550°F., cooled and chopped. The additives are mixed with the powdered or granular polyester(s) and the mixture can be heated and directly formed into blow molded items using machines which compound and mold.

## DESCRIPTION OF THE PREFERRED EMBODIMENT

The following examples are presented to more fully and clearly illustrate the present invention. They are presented as illustrative of the invention and are not to be construed as limiting the invention thereto. In the examples all parts and percentages are on a weight basis unless otherwise specified.

In all the examples, the compositions were prepared by melt blending the polyester resins and the indicated additional components as set forth in the Tables below using a Prodex single screw extruder at approximately 470°F. The resulting polymeric composition was formed, by injection molding, into test specimens, the size of which was consistent which what is specified in the ASTM methods set forth below. Certain properties of the composition were tested with the results of these tests also set forth in the Tables below.

The following ASTM methods were used in determining the physical characteristics of the compositions:

Double Gate Unnotched Izod ASTM D256

Notched Izod ASTM D256
DTUL ASTM D648

Example 1 illustrates an ABS composition having proportions of the relative components therein which is outside the scope of the present invention and is presented for illustrative purposes only. Examples 2 to 7 clearly demonstrate that the claimed composition range of A/B/S is critical to upgrade the NI properties as well as the DG,UNI properties of polyester/ABS blends.

TABLE I

| | EX. 1 | EX. 2 | EX. 2 | EX. 4 |
|---|---|---|---|---|
| PBT% | 91.8 | 95.8 | 91.8 | 91.8 |
| ABS% | 8.0 | 4.0 | 8.0 | 8.0 |
| A/B/S | (16/38/46) | (13/46/41) | (13/46/41) | (15/45/40) |
| STAB | 0.2 | 0.2 | 0.2 | 0.2 |
| DTUL, ° F,@264 psi | 154 | 138 | 145 | 154 |
| NI | 1.55 | 1.65 | 1.81 | 1.55 |
| UNI, DG | 0.98 | 1.42 | 1.82 | 1.55 |

TABLE II

| | EXAMPLE 5 | EXAMPLE 6 | EXAMPLE 7 |
|---|---|---|---|
| PBT%** | 91.8 | 84.8 | 79.8 |
| ABS% | 8.0 | 15.0 | 20.0 |
| A/B/S | (18/47/35) | (13/46/41) | (13/46/41) |
| STAB | 0.2 | 0.2 | 0.2 |
| DTUL, ° F,@264psi | 158 | 162 | 168 |
| NI | 1.87 | 1.88 | 2.61 |
| UNI, DG | 1.33 | 1.49 | 1.71 |
| The stabilizer (STAB) utilized was Irganox 1076.<br>PBT is poly(1,4-butylene terephthalate), Valox® 315 from the General Electric Company. | | | |

## Claims

1. A thermoplastic composition comprising (a) at least one polyester resin; and (b) an ABS terpolymer resin, characterized by, in the ABS terpolymer, the weight ratio of the A component ranges from about 13 to about 18 parts by weight; the weight ratio of the B component ranges from about 45 to about 47 parts by weight; and the weight ratio of the S component ranges from about 35 to about 42 parts by weight, based on the total weight of the ABS terpolymer.

2. The composition of claim 1 wherein the amount of polyester resin ranges from about 40 to about 98 parts by weight per one hundred parts by weight of the total of the polyester resin and the ABS terpolymer.

3. The composition of claim 2 wherein the amount of polyester resin ranges from about 60 to about 97 parts by weight per one hundred parts by weight of the total of the polyester resin and the ABS terpolymer.

4. The composition of Claim 1 wherein the at least one polyester resin is a high molecular weight linear thermoplastic polyester resin selected from the group consisting of polymeric glycol terephthalate and isophthalate esters having repeating units of the general formula:

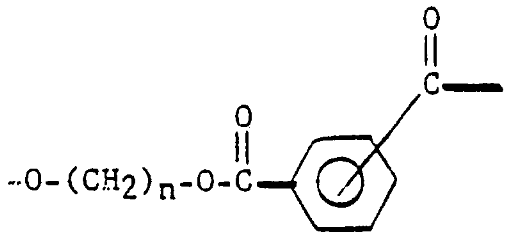

wherein n is a whole number of from 2 to 10, or a mixture of such esters.

5. The composition as defined in claim 4 wherein the polyester resin is a poly (butylene terephthalate) ester.

6. The composition as defined in claim 5 wherein the polyester resin is poly(1,4-butylene terephthalate).

7. The composition as defined in claim 3 wherein the polyester resin is poly(ethylene terephthalate) ester.

8. The composition of claim 4 wherein the at least one polyester resin is a mixture of poly(1,4-butylene terephthalate) and poly(ethylene terephthalate) ester resins.

9. The composition of claim 1 wherein the amount of ABS terpolymer ranges from about 2 to about 60 parts by weight per one hundred parts by weight of the total of the polyester resin and the ABS terpolymer.

10. The composition of claim 9 wherein the amount of ABS terpolymer ranges from about 3 to about 40 parts by weight per one hundred parts by weight of the total of the polyester resin and the ABS terpolymer.

11. The composition of claim 1 which further contains an effective stabilizing amount of at least one thermal stabilizer.

12. The composition of claim 1 which further contains a filler.

13. The composition of claim 1 which further contains an effective reinforcing amount of at least one reinforcing agent.

European Patent Office

# EUROPEAN SEARCH REPORT

Application Number

EP 90 10 1312

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 238 275 (W.C. CALVERT)<br>* claims, column 3, example 2 * | 1-4,6,9,10,12 | C 08 L 67/02 //<br>(C 08 L 67/02<br>C 08 L 55:02 ) |
| Y | US-A-4 753 986 (I.-W.C. WANG)<br>* claims 1-3,5 * | 1-4,6,9,10,12 | |
| A | EP-A-0 056 243 (BAYER AG)<br>* claims 1-6,12; page 11, table 1; page 7, lines 1-19 * | 1-4,6,9,10,12,13 | |
| A | EP-A-0 135 904 (MUBAY CHEMICAL CORPORATION)<br>* claims 1-3; page 16, lines 26-31; page 9, line 31 - page 10, line 35 a * | 1-4,9,10,12 | |
| A | US-A-4 526 926 (C.A. WEBER et al.)<br>* abstract; column 4, lines 17-24 * | 1 | |

TECHNICAL FIELDS SEARCHED (Int. Cl.5)

C 08 L
C 08 F

The present search report has been drawn up for all claims

| Place of search | Date of completion of the search | Examiner |
|---|---|---|
| BERLIN | 10-05-1990 | VOIGTLAENDER R O J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document